# EUROPÄISCHE PATENTSCHRIFT

(11) **EP 1 470 627 B1**
(45) Veröffentlichungstag und Bekanntmachung des Hinweises auf die Patenterteilung: **16.08.2006**
(21) Anmeldenummer: 03731705.4
(22) Anmeldetag: 23.01.2003
(51) Int. Cl.: H02J 3/32

(54) **ELEKTROFAHRZEUG ALS SPITZENLASTVERSORGUNGSEINHEIT**
ELECTRIC VEHICLE AS PEAK POWER SUPPLY UNIT
VEHICULE ELECTRIQUE COMME USINE DE POINTE

(30) Priorität: 24.01.2002 DE 10202828
(43) Veröffentlichungstag der Anmeldung: 27.10.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2003/000638
(87) Internationale Veröffentlichungsnummer: WO 2003/062018

(56) Entgegenhaltungen:
- BOJRUP M ET AL: "A DUAL PURPOSE BATTERY CHARGER FOR ELECTRIC VEHICLES" PESC '98. RECORD OF THE 29TH ANNUAL IEEE POWER ELECTRONICS SPECIALISTSCONFERENCE. FUKUOKA, MAY 18 - 21, 1998, PESC. ANNUAL POWER ELECTRONICS SPECIALISTS CONFERENCE, NEW YORK, NY : IEEE, US, Bd. VOL. 1, 18. Mai 1998 (1998-05-18), Seiten 565-570, XP001003846 ISBN: 0-7803-4490-1
- AKIRA TAKANO ED - ELECTRIC VEHICLE ASSOCIATION OF THE AMERICAS (EVAA): "DEVELOPMENT OF QUICK CHARGING STATION FOR ELECTRIC VEHICLE" INTERNATIONAL ELECTRIC VEHICLE SYMPOSIUM. ANAHEIM, DEC. 5 - 7, 1994, SAN FRANCISCO, EVAA, US, Bd. VOL. 2 SYMP. 12, 5. Dezember 1994 (1994-12-05), Seiten 709-718, XP000488466

## Beschreibung

Die vorliegende Erfindung betrifft ein Kraftfahrzeug, mit wenigstens einem Elektromotor, einem Energiespeicher zum Bereitstellen von Antriebsenergie für den Elektromotor, mit einem an den Energiespeicher angeschlossenen Steckverbinder zum Anschluss an eine Stromquelle und mit einer Steuerung zum Steuern des Stromflusses von der Stromquelle zum Energiespeicher.

Solche Fahrzeuge sind bereits seit geraumer Zeit bekannt und eignen sich durchaus für Fahrten auf kurzen und mittleren Strecken. Um ein solches Fahrzeug benutzbar zu machen, muss der verfügbare Energiespeicher aufgeladen werden. Hat das Fahrzeug eine bestimmte Stecke zurückgelegt, muss der Speicher emeut aufgeladen werden. Dabei wird ein vorsichtiger Fahrer nach jeder Fahrt den Energiespeicher neu aufladen, um stets die größtmögliche Reichweite zu seiner Verfügung zu haben.

Da Fahrten mit den Fahrzeugen - wie mit allen anderen Fahrzeugen auch - nicht immer exakt vorausgeplant werden können, kann es bei einer solchen Vorgehensweise vorkommen, dass der Energiespeicher des Fahrzeugs gerade dann aufgeladen werden soll, wenn der Preis für die Energie am höchsten ist, und wenn außerdem das Netz am höchsten belastet ist, z. B. während einer so genannten Mittagsspitze.

Dies ist sowohl nachteilig wegen des hohen Einkaufspreises der Energie als auch nachteilig wegen der Belastung des ohnehin schon hoch belasteten Netzes.

Aus BOJRUP M ET AL: "A DUAL PURPOSE BATTERY CHARGER FOR ELECTRIC VEHICLES" PESC '98. RECORD OF THE 29TH ANNUAL IEEE POWER ELECTRONICS SPECIALISTSCONFERENCE. FUKUOKA, MAY 18-21, 1998. PESC. ANNUAL POWER ELECTRONICS SPECIALISTS CONFERENCE, NEW YORK, NY : IEEE, US, Bd. VOL. 1, 18. Mai 1998 (1998-05-18), Seiten 565-570, XP001003846 ISBN: 0-7803-4490-1, ist eine Batterieladeeinheit für Elektrofahrzeuge bekannt, welche eine Aufladung der Batterien des Elektrofahrzeugs und eine Entladung und damit eine Einspeisung von elektrischer Energie in das Versorgungsnetz ermöglicht, wenn im Versorgungsnetz ein hoher Energiebedarf besteht.

Dabei kann die Situation eintreten, daß die Batterien im Elektrofahrzeug so stark entladen werden, daß das Elektrofahrzeug nur noch eine geringe Restreichweite hat, wenn ein Fahrer es nutzen will.

Aufgabe ist es, dem Besitzer mehr Kontrolle über die Nutzung des Fahrzeugs als Spitzenstromlieferant zu geben.

Gelöst wird die Aufgabe durch die Merkmale des unabhängigen Anspruchs 1. Bevorzugte Ausgestaltungen sind in den abhängigen Ansprüchen definiert.

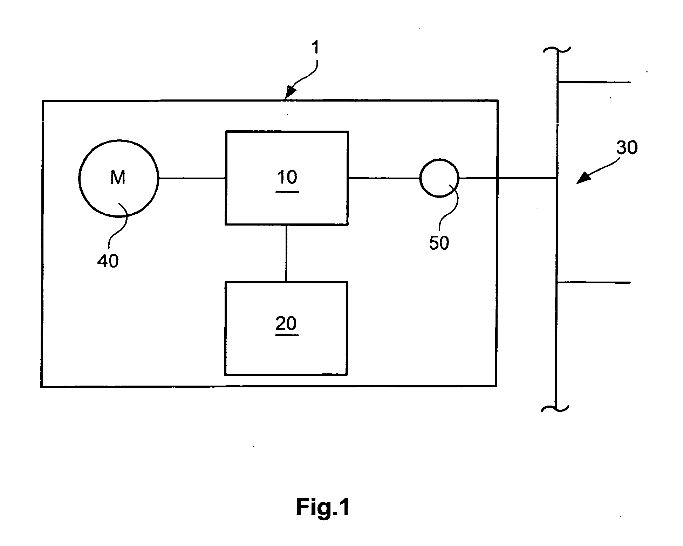

Nachfolgend wird ein Ausführungsbeispiel der Erfindung anhand der Fig. 1 näher beschrieben.

Die Fig. 1 zeigt in einem vereinfachten Blockschaltbild die Anordnung. Bezugszeichen 1 bezeichnet einen Rahmen, der diejenigen Komponenten umschließt, die dem Kraftfahrzeug zugeordnet sind. Demnach umfasst das Kraftfahrzeug eine Steuerung 10. Diese Steuerung 10 ist verbunden mit einem Energiespeicher 20, einem Antriebsmotor 40 und einem lösbaren Verbinder 50, der z. B. als Steckverbinder ausgeführt ist. Weiterhin besteht eine Verbindung zwischen diesem Verbinder 50 und einer Stromquelle 30, die hier als elektrisches Stromversorgungsnetz angedeutet ist.

Um ausreichend Energie für den Betrieb des Kraftfahrzeugs 1 bereit zu stellen, überwacht die Steuerung 10 den Ladezustand des Speichers, der z. B. eine Batterie, aber auch ein Kondensatorspeicher oder ähnliches sein kann. Erkennt die Steuerung 10, dass ein Aufladen des Speichers 20 erforderlich ist, lässt die Steuerung einen Stromfluss aus dem Netz 30 über den Verbinder 50 zu dem Speicher 20 zu und der Speicher wird aufgeladen. Dabei kann die Steuerung 10 natürlich auch die entsprechenden Lade-Charakteriska des Speichers berücksichtigen, so dass eine Überladung des Speichers sicher verhindert wird.

Weiterhin kann die Steuerung ebenfalls eine Aufladung in einem vorgebbaren ersten Zeitabschnitt ermöglichen. Dadurch wird es möglich, diesen Speicher 20 vorzugsweise nachts aufzuladen, wenn einerseits der Strompreis gering ist und damit Kosten für die Aufladung des Speichers ebenfalls vergleichbar gering bleiben und andererseits die Belastung des Netzes 30 nicht sehr hoch ist. Weiterhin kann die Steuerung derart ausgebildet sein, dass sie einen Stromfluss von dem Speicher 20 über den Steckverbinder 50 in das Netz 30 zulässt.

Dabei kann die abgebbare Ladungsmenge durch eine vorgebbare Rest-Ladungsmenge des Speichers 20 begrenzt werden.

Auf diese Weise kann z. B. nach einer Fahrt zur Arbeitsstelle bei vollgeladenem Speicher 20 die in dem Speicher noch vorhandene Energie wieder in das Netz 30 eingespeist werden, wenn der Bedarf besonders groß ist, z. B. zur Mittagsspitze. Die Steuerung unterbricht jedoch den Stromfluss vom Speicher 20 in das Netz 30, wenn eine vorgebbare Restmenge erreicht ist, so dass auf jeden Fall eine ausreichende Energiemenge im Speicher für die Rückfahrt am Abend sichergestellt ist.

Natürlich ist der zur Spitzenzeit in das Netz eingespeiste Strom entsprechend zu vergüten, so dass neben der Entlastung des Netzes auch noch ein wirtschaftlicher Vorteil zu erzielen ist.

Es wurde vorgeschlagen, dass ein Fahrzeug mit einem elektrischen Energiespeicher auch als Energiequelle für ein Versorgungsnetz, aus dem das Fahrzeug möglicherweise seine Energie bezieht, zu verwenden.

Bekanntlich liegt der Strombedarf tagsüber deutlich über dem nächtlichen Strombedarf. So neigt beispielsweise der Strombedarf in einem öffentlichen Stromversorgungsnetzwerk von einem Tiefpunkt zwischen 1:00 Uhr und 4:00 Uhr nachts morgens an (Morgenspitze) erreicht um die Mittagszeit herum seinen Höchststand (Mittagsspitze) und klingt dann abends wieder ab bis er seinen Tiefstand mitten in der Nacht erreicht. Da also der Energiebedarf nachts deutlich geringer ist als das übliche Energieangebot und die Verbraucher auch Nachtstrom beziehen, ist er im Preis deutlich günstiger ist als der Strompreis für Tagesstrom.

Ein elektrisches Versorgungsnetzwerk muss dann so ausgelegt sein, dass es nicht nur den Bedarf nachts, sondern auch in den höchsten Tagesspitzen problemlos zu decken hat. Dies führt bei den elektrischen Versorgungsunternehmen dazu, dass eine große Anzahl von elektrischen Energieerzeugern bereitgestellt werden muss, die zuverlässig eine solche Bedarfdeckung auch bei höchsten Mittagspitzen (kalter Wintertag) gewährleistet.

Es wird an dieser Stelle nun vorgeschlagen, dass ein Elektrofahrzeug, welches üblicherweise seine elektrische Energie aus einem elektrischen Versorgungsnetz zieht und deshalb auch über entsprechende Anschlüsse mit Anschluss an ein elektrisches Versorgungsnetz verfügt, nicht mehr mit der elektrischen Energie aus dem Versorgungsnetz geladen werden kann, sondern im Bedarfsfall auch bei einem bestimmten Zeitpunkt nicht benötigte Energie in das Versorgungsnetz einspeisen kann.

Wenn man einmal davon ausgeht, dass die Fahrzeuge werktags arbeitende Bevölkerung nur im Zeitraum zwischen 7:00 Uhr und 8:30 Uhr morgens und ca. 16:30 Uhr bis 18:30 Uhr benutzt werden müssen, steht ein solches Automobil die meiste Zeit des Tages unbenutzt auf einem Parkplatz. Das Aufladen des Energiespeichers des Elektrofahrzeugs nachts am Wohnort des Fahrzeughalters ist kein Problem und wird auch bereits durchgeführt. Neu ist aber der erfindungsgemäße Vorschlag, das Automobil auch nach Erreichen des Arbeitsplatzes mit einem elektrischen Stromnetz zu verbinden, um dann die im Bedarfsfall notwendige Energie für die Spitzenstromzeiten bereit zu stellen.

Wenn das Automobil dabei über sehr schnell entlade/aufladebare Batterien verfügt, ist es daher möglich, schon bei einer Anzahl von 500-1000 Mobilen dieser Technik eine sehr große Einspeiseleistung dem Netz zur Verfügung zu stellen.

Der besondere Vorteil für das elektrische Versorgungsuntemehmen besteht dabei darin, dass es auf einen elektrischen Energiespeicher zurück greifen kann, den es selbst nicht bezahlt hat und für dessen Wartung es auch nicht aufkommen muss. Für den Benutzer des Fahrzeugs besteht der Vorteil der Erfindung darin, dass er beispielsweise zur Mittagszeit, wenn er also ohnehin sein Automobil nicht benötigt, weil er an der Arbeitsstelle ist, den noch gut gefüllten Speicher seines Fahrzeugs des elektrische Versorgungsuntemehmens quasi vermietet und die darin enthaltene Energie verkaufen kann. Der Verbraucher kann also die elektrische Energie aus dem Fahrzeug in das Versorgungsnetz mittags einspeisen und wird einen vergleichsweise guten Preis bekommen, während er nachts zum Aufladen seines Fahrzeugs zu einem günstigen Preis (Nachtstrom) laden muss.

Es ist auch vorgesehen, dass ein bestimmter Mindeststand des elektrischen Speichers des Fahrzeug nicht unterschritten wird und im Bedarfsfall kann auch nach der Mittagsspitze der elektrische Speicher des Fahrzeugs wieder aufgeladen werden und zwar dann, wenn der Bedarf im Netz nachmittags wieder abgeklungen ist.

Es ist auch vorgesehen, dass der Benutzer sein Fahrzeug individuell so einstellt, dass er abends ausreichend Energie hat, um den Nachhauseweg anzutreten (Mindestgehalt von Energie mit ausreichender Sicherheit), so dass die gesamte Aufladung des Speichers erst wieder in der darauffolgenden Nacht mit entsprechendem Nachstrom erfolgt.

Durch eine entsprechende Programmierung (möglicherweise auch über Femeingabe (Handy des Benutzers)) kann also auch der Benutzer des Fahrzeugs die Zeiträume oder die Zeiten vorgeben, innerhalb derer überhaupt nur eine Entladung seines Speichers stattfinden kann.

Die Erfindung ist besonders in Ballungsräumen geeignet, wo große Parkplätze und große Parkgaragen betrieben werden. Ganz besonders scheint die Erfindung für den Einsatz in Parkgaragen von Flughäfen, insbesondere solche Flughäfen, die den Urlaubsverkehr abwickeln, geeignet zu sein, denn in solchen Flughäfen stehen oftmals viele tausend PKWs durchschnittlich 7-14 Tage völlig unbenutzt. Während dieser Zeit könnte sich ein entsprechendes Power-Management am entsprechenden Anschluss der Fahrzeuge, wenn sie als erfindungsgemäße elektrische Fahrzeuge ausgebildet sind, dem elektrischen Versorgungsnetz zur Verfügung stellen, welches in den Spitzenzeiten die jeweiligen Speicher der Fahrzeuge entlädt und in den geringeren Bedarfszeiten die Speicher der Fahrzeuge wiederum mit elektrischer Energie lädt.

Die Erfindung ist nachfolgend anhand eines in der Zeichnung dargestellten Ausführungsbeispiels näher erläutert.

Hierin zeigt Fig. 1 - wie beschrieben - ein Übersichtsbild für den Anschluss eines erfindungsgemäßen Fahrzeugs an ein elektrisches Versorgungsnetz. Fig. 2 zeigt ein übliches Tagesdiagramm des Strombedarfs bei einem elektrischen Versorgungsuntemehmen. Fig. 3 zeigt eine Ladezustandszeittabelle mit dem Ladezustand eines erfindungsgemäßen Fahrzeugs.

Der elektrische Speicher des Fahrzeugs 1 ist mit einer entsprechenden Steuerungselektronik (Power Management System) ausgestattet, welche es erlaubt, nicht nur die elektrische Aufladung, sondern auch eine Entladung des Speichers auszulösen und zu steuern.

Darüber hinaus kann das Power-Management auch so programmiert sein, dass eine Entladung nur für eine ganz bestimmte vom Benutzer vorgegebene Zeiten möglich ist. Beispielsweise kann vorgesehen sein, dass eine Entladung und damit Einspeisung in das elektrische Energieversorgungsnetz nur während der Zeit von 10:00 Uhr morgens bis 15:00 Uhr nachmittags möglich ist, ansonsten, wenn das Fahrzeug an das Versorgungsnetz angeschlossen ist, eine entsprechende Ladung der Batterie erfolgt.

Auch kann das Power-Management so programmiert sein, dass bei einer vorgenommenen Entladung in der Zeit von 7:00 Uhr morgens bis 16:00 Uhr nachmittags nicht gleich eine Aufladung erfolgt, sondern eine Aufladung erst in der Nachtzeit zwischen 12:00 Uhr nachts und 4:00 Uhr morgens erfolgt, also dann, wenn besonders günstiger Nachtstrom aus einem elektrischen Versorgungsnetz zu beziehen ist.

Ferner kann das Energiemanagementsystem des Fahrzeugs so programmiert sein, dass eine Mindestlademenge grundsätzlich im Speicher verbleibt, also nicht in das Versorgungsnetz eingespeist werden kann, um in jedem Fall sicherzustellen, dass der Benutzer die für ihn gewünschte Strecke mit dem Fahrzeug, also z.B. die Heimfahrt von der Arbeitsstelle nach Hause ordnungsgemäß durchführen kann.

Selbstverständlich sind noch weitere Programmierungen möglich, so dass das Energiemanagement auch vom Benutzer selbst in jeder nur erdenklichen Weise nach den Wünschen des Benutzers eingestellt werden kann, wobei im Bedarfsfall eine Einspeisemöglichkeit in das Versorgungsnetz möglich ist.

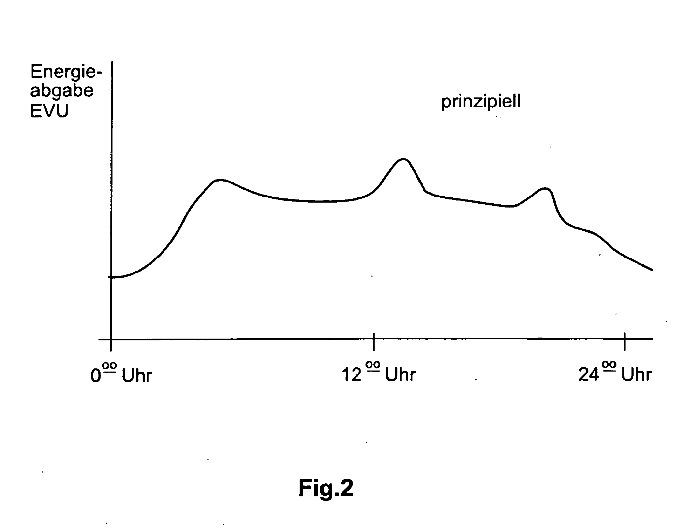

Wie man in Fig. 2 erkennen kann, ist der Strom/Energiebedarf eines elektrischen Versorgungsnetzes (EVU) nicht über den gesamten Tag linear verteilt, sondern steigt von einem Tiefstpunkt am frühen Morgen (ca.1:00 Uhr bis 3:00 Uhr nachts) an, erreicht eine erste Morgenspitze, erreicht dann später die sogenannte Mittagsspitze, also ihren Höchstpunkt und fällt dann unregelmäßig wieder zur Nacht hin ab. Das elektrische Versorgungsnetz, welches sich dazu verpflichtet, den am elektrischen Versorgungsnetz angeschlossenen Verbrauchern auch zu Spitzenzeiten stets die ausreichende elektrische Energie zur Verfügung zu stellen, muss nicht nur dafür sorgen, entsprechende Energie in das Versorgungsnetz nachzuführen, sondern auch immer so viel Energie bereit zu halten, dass zu allen Zeiten, d.h. also auch in außergewöhnlichen Spitzenzeiten stets die Verpflichtung der elektrischen Versorgung mit elektrischer Energie bei einem konstanten Spannungspegel und einer konstanten Frequenz.bereit zu stellen. Es liegt auf der Hand, dass es hierzu auch schon heute eine Vielzahl von Steuerungseingriffen sowohl auf der Erzeugerseite als auch in der Verteilung der elektrischen Energie bedarf.

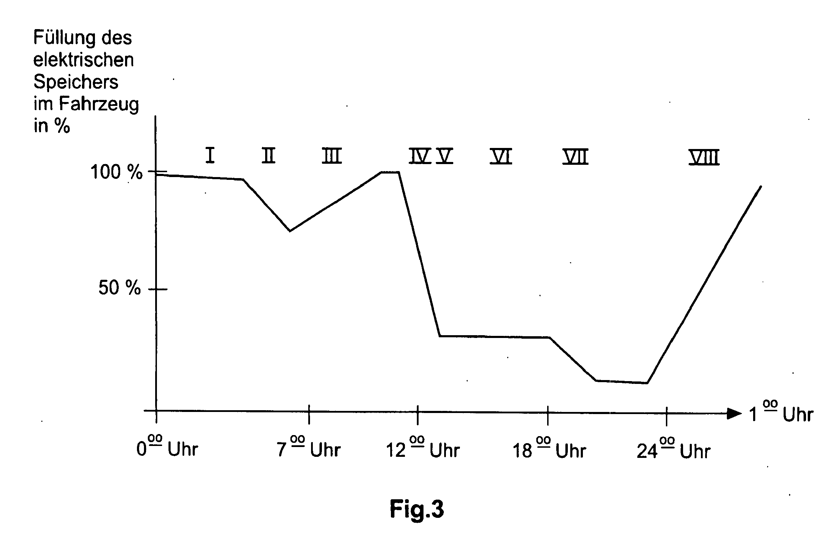

Fig. 3 zeigt einen beispielhaften Verlauf des Ladezustands des elektrischen Speichers eines erfindungsgemäßen Fahrzeugs. Im elektrischen Speicher, der in der Nacht mit Nachtstrom geladen wurde, also eine hundertprozentige Füllung (I) vorweist, sinkt dieser Ladezustand bei der morgendlichen Fahrt (II) zur Arbeit ab. Bei Erreichen (III) des Arbeitsplatzes und des Anschlusses des Fahrzeugs über die elektrischen Leitungen an das elektrische Versorgungsnetz wird der Ladezustand gegebenenfalls wieder auf 100% gebracht. Zur Mittagszeit (IV), also beim Auftreten der Mittagsspitze (siehe Fig. 2) wird ein Großteil der gespeicherten elektrischen Energie im Speicher in das angeschlossene elektrische Versorgungsnetz eingespeist, so dass der Ladezustand entsprechend innerhalb von sehr kurzer Zeit auf ein vorgesehenes Minimum (V) sinkt. Dieses Minimum ist vom Benutzer oder Fahrzeughersteller eingestellt worden (kann auch auf einem anderen Wege eingestellt werden) und sollte ausreichen, dass mit dem Fahrzeug noch die Heimfahrt angetreten werden kann, ohne es vorher aufzuladen.

Im dargestellten Beispiel kann aber der Ladezustand nachmittags (VI) auch wieder durch Aufnahme von Energie aus dem Versorgungsnetz erhöht werden, und während der Heimfahrt (VII) sinkt wieder der Ladezustand weiter ab. Im Anschluss des bei anschließendem Anschluss des Elektrofahrzeugs an das elektrische Versorgungsnetz kann der Ladezustand abends/nachts (VIII) wieder auf den vorgesehenen Wert (100%) gebracht werden.

Es sei nochmals darauf hingewiesen, dass der vorgesehene Verlauf gemäß Fig. 3 rein beispielhaft ist.

Wenn das Elektrofahrzeug über eine entsprechende Eingabeoberfläche verfügt, kann der Benutzer des Fahrzeugs eine Vielzahl von Einstellungen einnehmen.

So kann beispielsweise der Benutzer durch eine entsprechende Eingabe die Zeiträume vorgeben, innerhalb derer überhaupt nur eine Entladung des elektrischen Speichers bei Anschluss an ein elektrisches Versorgungsnetz erfolgen kann.

Wie eine entsprechende Dokumentation der Auflade- und Entladevorgänge zeigt, kann der Benutzer sich auch nach mehreren Tagen noch ansehen, wann welche Energiemengen in das elektrische Versorgungsnetz eingespeist wurden.

Das Fahrzeug verfügt neben dem elektrischen Speicher, beispielsweise einer Lithiumbatterie oder einer anderen Speichertechnologie, über ein entsprechendes Power Management Programm zur Steuerung des Ladezustands des elektrischen Speichers und für die Verwertung der Eingaben des Benutzers als auch zur Dokumentation.

Darüber hinaus kann das Fahrzeug über eine entsprechende DatenSchnittstelle (nebst Empfänger/Sender für Drahtlos (Handy-) Steuerung) verfügen, damit das Fahrzeug sämtliche für das Laden als auch für das Entladen (Einspeisung) notwendigen Daten an eine entsprechende Schnittstelle des elektrischen Energieversorgers senden oder empfangen kann.

Das erleichtert eine Dokumentation der jeweiligen Entlade- und Auflade-Zustände/Zeiten sowie deren Abrechnung. Bei der Abrechnung ist zu berücksichtigen, dass in der Mittagsspitze eingespeister Strom mit einem besseren Preis vergütet werden kann als Nachtstrom, der regelmäßig in größeren Mengen problemlos und günstiger zur Verfügung gestellt werden kann.

Die Entladung des Speichers mit der dann einhergehenden Einspeisung von elektrischer Energie in das Versorgungsnetz kann auch dazu verwendet werden, eventuell andere Fahrzeuge mit Elektrospeicher, denen der Ladezustand zu gering geworden ist, entsprechend soweit aufzuladen, dass diese noch weiter fahren können.

Die Erfindung erlaubt daher auch die elektrische Zusammenschaltung von mehreren Fahrzeugen mit ihren elektrischen Speichern.

## Patentansprüche

1. Kraftfahrzeug, mit wenigstens einem Elektromotor, einem Energiespeicher zum Bereitstellen von Antriebsenergie für den Elektromotor, mit einem an den Energiespeicher angeschlossenen Steckverbinder zum Anschluss an ein Versorgungsnetz und mit einer Steuerung, die eine Uhr umfasst, zum Steuern des Stromflusses durch das Versorgungsnetz und den Energiespeicher,
wobei die Steuerung einen Stromfluss vom Energiespeicher zum Versorgungsnetz zulässt und die Steuerung eine Einrichtung zum Erfassen der Ladungsmenge in dem Energiespeicher umfasst und den Stromfluss vom Energiespeicher zum Versorgungsnetz bei Erreichen eines vorgebbaren Schwellwertes der verbleibenden Rest-Ladungsmenge unterbricht, so dass eine ausreichende Energiemenge für eine bestimmte Fahrstrecke sichergestellt ist und
dass mit der Steuerung gekoppelte Eingabemittel vorgesehen sind, mittels der ein Benutzer des Fahrzeugs die Zeit bzw. den Zeitraum einstellen kann, innerhalb dessen wenigstens teilweise eine Entladung des Speichers und damit eine Einspeisung der Energie in das Versorgungsnetz durchführbar ist.

2. Kraftfahrzeug nach Anspruch 1,
**gekennzeichnet durch** eine Kommunikations-Einrichtung zur Kommunikation zwischen der Steuerung (10) und dem Netz (30).

3. Fahrzeug nach einem der vorhergehenden Ansprüche,
**dadurch gekennzeichnet, dass** mit der Steuerung der Speicher bei Anschluss an das elektrische Versorgungsnetz kontrolliert entladen werden kann und die elektrische Energie in das elektrische Versorgungsnetz eingespeist wird.

4. Fahrzeug nach einem der vorhergehenden Ansprüche,
**dadurch gekennzeichnet, dass** der Steuerung ein Power Management Programm zugeordnet ist, welches bei Anschluss des Fahrzeugs an ein elektrisches Versorgungsnetz eine automatische Aufladung oder Entladung des Speichers veranlasst.

5. Fahrzeug nach einem der vorhergehenden Ansprüche,
**dadurch gekennzeichnet, dass** das Fahrzeug mit einem Stromzähler/ Energiezähler ausgestattet ist, welcher die vom Speicher aufgenommene elektrische Energie und die in das Versorgungsnetz eingespeiste Energie misst.

6. Fahrzeug nach einem der vorhergehenden Ansprüche,
**dadurch gekennzeichnet, dass** in dem Fahrzeug eine Aufzeichnungseinheit vorgesehen ist, die feststellt, wann welche Menge elektrischer Energie in den Speicher geladen oder in das elektrische Versorgungsnetz eingespeist wurden.

7. Fahrzeug nach einem der vorhergehenden Ansprüche,
**dadurch gekennzeichnet, dass** das Fahrzeug einen elektrischen Anschlussstecker aufweist, welcher mit einem entsprechenden Anschlussstecker des elektrischen Versorgungsnetzes verbindbar ist, wobei der Anschlussstecker eine Erdleitung aufweist mittels welcher Daten des Fahrzeugs über ein Datennetz des elektrischen Versorgungsunternehmens austauschbar sind und darüber hinaus weitere Daten über das Datennetz eingespeist werden können, beispielsweise Daten über den Zustand des elektrischen Speichers des Fahrzeugs.

8. System, bestehend aus einem Versorgungsnetz mit einer Vielzahl von Anschlüssen und einem Fahrzeug nach einem der vorhergehenden Ansprüche.

## Claims

1. A motor vehicle comprising at least one electric motor, an energy storage device for providing drive energy for the electric motor, a plug connector connected to the energy storage device for connection to a supply network and a control means including a clock for controlling the flow of current through the supply network and the energy storage device,
wherein the control means permits a flow of current from the energy storage device to the supply network, and the control means includes a device for detecting the amount of charge in the energy storage device and interrupts the flow of current from the energy storage device to the supply network, when a predeterminable threshold value of the remaining residual charge amount is reached, so that a sufficient amount of energy for a defined driving route is ensured, and
that there are provided input means which are coupled to the control means and by means of which the user of the motor vehicle can set the time or period of time, within which discharge of the storage device and thus a feeding of the energy into the supply network is at least partially realizable.

2. A motor vehicle according to claim 1,
**characterized by** a communication device for communication between the control means (10) and the network (30).

3. A vehicle according to one of the preceding claims,
**characterized in that** by means of the control means when connected to the electrical supply network the storage device can be controllably discharged and the electrical energy is fed into the electrical supply network.

4. A vehicle according to one of the preceding claims,
**characterized in that** associated with the control means is a power management programme which, when the vehicle is connected to an electrical supply network, causes an automatic charging or discharging of the storage device.

5. A vehicle according to one of the preceding claims,
**characterized in that** the vehicle is fitted with a current metre/energy cell which measures the electrical energy received in the storage device and the energy fed into the supply network.

6. A vehicle according to one of the preceding claims,
**characterized in that** provided in the vehicle is a recording unit which establishes when and what amount of electrical energy was charged into the storage device or fed into the electrical supply network.

7. A vehicle according to one of the preceding claims,
**characterized in that** the vehicle has an electrical connection plug which can be connected to a corresponding connection plug of the electrical supply network, wherein the connection plug has a ground line by means of which data of the vehicle data is exchangeable via a data network of the electrical supply utility and in addition further data can be fed in via the network, e.g. data of the condition of the electrical storage device of the vehicle.

8. A system comprising a supply network with a plurality of connections, and a vehicle according to one of the preceding claims.

## Revendications

1. Véhicule automobile, avec au moins un moteur électrique, avec un accumulateur d'énergie pour mettre à disposition de l'énergie motrice pour le moteur électrique, avec un connecteur raccordé à l'accumulateur d'énergie pour le raccordement à un réseau d'alimentation et avec une commande, qui comprend une horloge, pour commander le flux de courant à travers le réseau d'alimentation et l'accumulateur d'énergie,
la commande permettant un flux de courant de l'accumulateur d'énergie vers le réseau d'alimentation et la commande comprenant un équipement pour détecter la quantité de charge dans l'accumulateur d'énergie et interrompant le flux de courant de l'accumulateur d'énergie vers le réseau d'alimentation lorsqu'une valeur croissante atteignable de la quantité de charge restante est atteinte, de telle sorte qu'une quantité d'énergie suffisante est assurée pour un trajet défini et
qu'avec la commande sont prévus des moyens de saisie couplés, au moyen desquels un utilisateur du véhicule peut régler le temps et/ou l'intervalle à l'intérieur duquel peuvent être réalisées au moins partiellement une décharge de l'accumulateur et ainsi une restitution en énergie dans le réseau d'alimentation.

2. Véhicule automobile selon la revendication 1
**caractérisé par** un équipement de communication pour la communication entre la commande (10) et le réseau (30).

3. Véhicule automobile selon l'une quelconque des revendications précédentes
**caractérisé en ce qu'**avec la commande, l'accumulateur peut être déchargé de manière contrôlée lors de la connexion au réseau électrique d'alimentation et que l'énergie électrique est introduite dans le réseau électrique d'alimentation.

4. Véhicule automobile selon l'une quelconque des revendications précédentes
**caractérisé en ce qu'**est attribué à la commande un programme de gestion de puissance, lequel déclenche une charge ou une décharge automatique de l'accumulateur lorsque le véhicule est raccordé à un réseau électrique d'alimentation.

5. Véhicule automobile selon l'une quelconque des revendications précédentes
**caractérisé en ce que** le véhicule automobile est équipé d'un compteur de courant/d'énergie, lequel mesure l'énergie électrique reçue par l'accumulateur et l'énergie introduite dans le réseau d'alimentation.

6. Véhicule automobile selon l'une quelconque des revendications précédentes
**caractérisé en ce que** dans le véhicule est prévue une unité d'enregistrement, qui constate à quel moment quelle quantité d'énergie électrique a été chargée dans l'accumulateur ou introduite dans le réseau électrique d'alimentation.

7. Véhicule automobile selon l'une quelconque des revendications précédentes
**caractérisé en ce que** le véhicule présente une fiche de connecteur électrique, laquelle peut être reliée à une fiche de connecteur correspondante du réseau électrique d'alimentation, la fiche de connecteur présentant une prise de terre au moyen de laquelle peuvent être échangées des données du véhicule par l'intermédiaire d'un réseau de données de l'entreprise d'alimentation électrique et au moyen de laquelle en outre peuvent être introduits d'autres données par l'intermédiaire du réseau de données, par exemple des données sur l'état de l'accumulateur électrique du véhicule.

8. Système se composant d'un réseau d'alimentation avec une pluralité de connexions et un véhicule selon l'une quelconque des revendications précédentes.
